Europäisches Patentamt

European Patent Office

Office européen des brevets

(19)

(11) EP 0 775 171 B1

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(21) Anmeldenummer: 96911827.2

(22) Anmeldetag: **09.05.1996**

(51) Int Cl.⁶: $C08L\ 3/02$

(86) Internationale Anmeldenummer:
**PCT/AT96/00093**

(87) Internationale Veröffentlichungsnummer:
**WO 96/35748 (14.11.1996 Gazette 1996/50)**

(54) **VERWENDUNG VON WEICHMACHERN FÜR DIE THERMOPLASTIFIZIERUNG VON STÄRKE**

USE OF PLASTICISERS FOR THERMO-PLASTICISING STARCH

UTILISATION DE PLASTIFIANTS POUR LA THERMOPLASTIFICATION D'AMIDON

(84) Benannte Vertragsstaaten:
**AT BE CH DE DK ES FR GB GR IE IT LI LU MC NL PT SE**

(30) Priorität: **11.05.1995 AT 79195**

(43) Veröffentlichungstag der Anmeldung:
**28.05.1997 Patentblatt 1997/22**

(73) Patentinhaber: **TEICH AKTIENGESELLSCHAFT 3200 Obergrafendorf (AT)**

(72) Erfinder:
• **HASCHKE, Heinz
  A-2542 Kottingbrunn (AT)**
• **TOMKA, Ivan
  CH-1722 Bourguillon (CH)**

(74) Vertreter: **Dungler, Karin
  Isovolta
  Österreich. Isolierstoffwerke AG
  Industriezentrum NÖ-Süd
  Isovoltastrasse 3
  2355 Wiener Neudorf (AT)**

(56) Entgegenhaltungen:
EP-A- 0 304 401    EP-A- 0 404 723
WO-A-96/03443    DE-A- 1 494 148

**Beschreibung**

Stand der Technik

Stärke eignet sich als polymerer Ausgangsstoff aufgrund ihrer ökologischen Eigenschaften für eine Vielzahl von Anwendungen insbesondere auf dem Gebiet der Verpackungsindustrie. Im Gegensatz zu den polymeren Rohstoffen, welche durch die Petrochemie gewonnen werden können, ist Stärke ein nachwachsender Naturstoff, welcher ferner biologisch abbaubar ist. An dieses natürliche Polymer wird jedoch ebenso wie an die synthetischen Polymere die Anforderung gestellt, bei erhöhter Temperatur leicht verarbeitbar zu sein. Diese thermoplastischen Eigenschaften sind jedoch bedingt durch die Molekülstruktur. So zeigt es sich, daß langkettige, unverzweigte Moleküle gute thermoplastische Eigenschaften aufweisen, während verzweigte Moleküle wie das Amylopektin der Stärke und insbesondere vernetzte Moleküle, wie native Stärke, praktisch keine thermoplastischen Eigenschaften besitzen.

Es hat sich nun gezeigt, daß der über inter- und intramolekulare Wasserstoffbrücken vernetzte Molekülverband der nativen Stärke durch die Zugabe von Weichmachern in Gegenwart von Wasser aufgelockert werden kann.

Gemäß der US-A 5,362,777 wird als Weichmacher Glyzerin eingesetzt. Die Wirkung von Glyzerin als Weichmacher besteht darin, daß sich die kleinen beweglichen Glyzerinmoleküle in Gegenwart empirisch festzulegender Wassermengen zwischen die Kettenmoleküle der Stärke schieben und dadurch die Ausbildung von Wasserstoffbrückenbindungen zwischen den Stärkemolekülen unterbinden, sodaß die größtenteils unerwünschte Vernetzung der Stärkemoleküle vermieden werden kann. Durch diese Wechselwirkung zwischen dem Glyzerin und den Stärkemolekülen wird um die Stärkemoleküle eine Art Hülle gebildet, sodaß der knäuelige Molekülverband der Stärke aufgelockert und dadurch ein molekular laminarer und somit thermoplastischer, d.h. fließfähiger Zustand der Stärke erzielt werden kann. Der Nachteil solcher kleinen beweglichen Weichmachermoleküle wie beispielsweise Glyzerin besteht jedoch darin, daß diese durch Diffusion und insbesondere in Kontakt mit wasserhältigen Stoffen aus dem Molekülverband migrieren, wobei das Wasser als Extraktionsmittel wirkt.

Verwendet man daher derartige thermoplastifizierte Stärkeprodukte als Verpackungsmaterialien, so werden die Verpackungsgüter durch die migrierten Weichmachermoleküle kontaminiert.

Es wurde daher versucht, höhermolekulare Substanzen, welche aufgrund ihrer sperrigen Molekülstrukturen zu einer derartigen Migration nicht neigen, als Weichmacher ebenfalls in Gegenwart empirisch festzulegender Wassermengen für Stärke einzusetzen. Gemäß der EP-A 304 401 wird thermoplastischer Polyvinylalkohol als Weichmacher vorgeschlagen. Dieser migriert aufgrund seiner hochmolekularen Struktur zwar nicht aus dem Stärkemolekülverband, ist jedoch im Fall von reinem Polyvinylalkohol aufgrund seines hohen Verseifungsgrades, nämlich über 99%, nicht genug wasserlöslich. Teilacetylierter Polyvinylalkohol mit beispielsweise 10 Mol% an Vinylacetat-Einheiten, ist zwar geeigneter, neigt jedoch bei erhöhter Temperatur zur Abspaltung von Essigsäure, da die Acetylgruppe sowohl thermisch, als auch säure- und basenkatalysiert leicht abgespalten werden kann. Die Abspaltung von Essigsäure ist jedoch insbesondere bei Lebensmittelverpackungen unerwünscht.

Aus der DE-A-1494148 ist es nun vorbekannt, Polyvinylalkoholderivate durch Acetalisierung von Polyvinylalkohol mit Formaldehyd oder Acetaldehyd herzustellen. Diese Umsetzungsprodukte werden in Form einer physikalischen Mischung mit Stärke versetzt und zu Folien weiterverarbeitet. Mangels einer chemischen Reaktion zwischen Stärke und Polyvinylalkohol können nur die physikalischen Parameter wie Festigkeit oder Klebrigkeit der Folie beeinflußt werden, nicht aber die chemische Konstitution der Stärke selbst. Die chemische Konstitution der Stärke wird jedoch bei der Thermoplastifizierung verändert.

Aufgabe der Erfindung ist es daher, die eingangs genannten Nachteile bei der Verwendung von Weichmachern für die Thermoplastifizierung von Stärke zu beseitigen.

Darstellung der Erfindung

Erfindungsgemäß wird daher die Verwendung von biologisch abbaubaren Umsetzungsprodukten von Polyvinylalkohol und Kohlehydraten in Gegenwart empirisch festzulegender Wassermengen als Weichmacher für die Thermoplastifizierung von Stärke und/oder Stärkegemischen vorgeschlagen, welche aus Polyvinylalkoholen mit einem Verseifungsgrad von 88 bis 99,5 Mol% durch säurekatalysierte Acetalisierungs- und/oder Umacetalisierungsreaktion mit Carbonylgruppen bzw. potentielle Carbonylgruppen enthaltenden Kohlenhydraten herstellbar sind, wobei der Acetalisierungsgrad - ausgedrückt in Carbonyläquivalenten pro 100 Vinylalkoholäquivalente - zwischen 0,2 und 20 liegt. Besonders bevorzugt ist die Verwendung von Umsetzungsprodukten von Polyvinylalkohol und Kohlehydraten, welche aus Polyvinylalkoholen und Kohlenhydraten auf Basis von Stärke-Abbauprodukten in einem Verhältnis von 2 bis 5 Carbonyläquivalenten auf 100 Vinylalkoholäquivalente entsprechend einem Acetalisierungsgrad von 4 bis 10 Mol% bezogen auf die Hydroxylgruppen des eingesetzten Polyvinylalkohols herstellbar sind.

Dabei sei ein Carbonyläquivalent definiert als das mittlere (Zahlenmittel) Molekulargewicht der eingesetzten Carbonyl- bzw. potentielle Carbonylkomponente, dividiert durch die mittlere Anzahl von Carbonylgruppen bzw. potentielle Carbonylgruppen. Es kann daher bei bekannter Strukturformel der Carbonylkomponente berechnet, oder aber durch Oximbildung nach R.C. Schulz et al (Makromol.Chemie 20 [1956], 161) bestimmt werden. Dabei sei das Vinylalkoholäquivalent berechnet nach

$$\ddot{A}qu M_{VA} = \frac{44. \%V + 86.(1-\%V)}{\%V},$$

wobei %V der prozentuale Verseifungsgrad des eingesetzten Polyvinylalkohols aus Polyvinylacetat ist.

Grundsätzlich eignen sich alle Typen von Polyvinylalkoholen, soferne sie einen Verseifungsgrad von mindestens 80 Mol% aufweisen. Ist jedoch der Verseifungsgrad zu niedrig, so neigt das daraus hergestellte Umsetzungsprodukt von Polyvinyalalkohol und Kohlehydraten wieder zu deutlicher Essigsäure-Abspaltung. Ab Verseifungsgraden von 88% - insbesondere ab 95% ist die Essigsäure-Abspaltung aber bereits so gering bzw. wird Rest-Acetat während der säurekatalysierten Acetalisierungsreaktion so weit abgespalten und insbesondere bei der Reaktion im Kneter oder Extruder der Granulatherstellung so weit ausgedampft, daß praktisch keine störende Acetatmigration auftritt.

Hauptsächlich aus rheologischen Gründen - aber auch aus Gründen der schnelleren biologischen Abbaubarkeit - werden eher niedrigmolekulare Polyvinylalkohole als Ausgangsstoffe für die erfindungsgemäße Verwendung des Umsetzungsproduktes von Polyvinylalkohol und Kohlehydraten eingesetzt. Obwohl Polyvinylalkohole mit Polymerisationsgraden zwischen 10 und 4000 grundsätzlich geeignet sind, werden bevorzugt solche mit mittleren Polymerisationsgraden zwischen 50 und 2800, vorzugsweise zwischen 100 und 1500 eingesetzt. Besonders bevorzugt sind solche mit mittleren Polymerisationsgraden zwischen 200 und 750. Dieses Umsetzungsprodukt von Polyvinylalkohol und Kohlehydraten weist nun überraschenderweise eine Weichmacherwirkung analog zu dem eingangs genannten Glyzerin auf, obwohl es eine hochmolekulare Verbindung, bestehend aus der Polyvinylalkohol-Grundkette und den Kohlenhydrat-Seitenketten ist. Obwohl aufgrund dieser Kohlenhydrat-Seitenketten ebenso eine heterogene Molekülstruktur wie bei der Stärke selbst zu erwarten gewesen wäre, schiebt sich dennoch dieses Umsetzungsprodukt von Polyvinylalkohol und Kohlehydraten mit seinen Dipolen und Wasserstoffbrücken-bildenden Gruppen analog zu dem eingangs genannten Glyzerin zwischen die Stärkemoleküle, sodaß der heterogene Molekülverband der Stärke aufgelockert und deren Thermoplastifizierung erfolgt, wobei die Stärke in der Schmelze des Umsetzungsproduktes von Polyvinylalkohol und Kohlehydraten aufgeschmolzen wird.

Ein weiterer Vorteil der Erfindung liegt darin, daß die genannten Umsetzungsprodukte von Polyvinylalkohol und Kohlehydraten auch als Weichmacher für Mischungen (sogenannte Blends) bestehend aus Stärke und anderen thermoplastischen Polymeren auf Basis von Polyestern, insbesondere Polyestern aus Hydroxyalkanoaten und/oder Alkandiolen mit Alkandicarbonsäuren verwendet werden können. Die Stärkemischungen bestehen beispielsweise aus nativer Kartoffelstärke und Polycaprolacton, Polyhydroxybutyrat, Polyhydroxyvalerat oder Polyestern aus Äthylenglycol oder Propylenglycol und Maleinsäure oder Fumarsäure.

Weitere Vorteile der erfindungsgemäßen Verwendung liegen darin, daß der Verseifungsgrad des Polyvinylalkohols in einer bevorzugten Ausführungsform zwischen 90 und 99 Mol%, liegen kann und das Kohlenhydrat ein Mono- oder Disaccharid oder ein Polysaccharid, vorzugsweise Stärke oder ein Stärke-Abbauprodukt sein kann, wobei das Stärke-Abbauprodukt vorzugsweise ein durch Säurekatalyse hergestelltes, partiell hydrolysiertes Abbauprodukt ist.

Bei der erfindungsmäßigen Verwendung kann ferner das Polysaccharid ein aus Stärke durch Oxidationsreaktion hergestelltes Abbauprodukt sein, wobei die Oxidationsreaktion an nativer Stärke in Gegenwart wäßriger Hypochloritlösung durchgeführt werden kann.

Vorteilhafterweise wird ferner als Polysaccharid ein aus Stärke durch thermische und mechanische Belastung und dadurch eingeleitete Entknäuelung der Stärkemoleküle sowie Spaltung von Vernetzungsbrücken und partieller Dehydratation bzw. Brenz-Reaktionen hergestelltes Stärke-Abbauprodukt, sogenannte destrukturierte, desintegrierte Stärke verwendet.

Weitere Vorteile der erfindungsgemäßen Verwendung bestehen darin, daß das Polysaccharid ein aus Stärke durch thermische und mechanische Belastung und dadurch eingeleitete Entknäuelung der Stärkemoleküle, sowie Spaltung von Vernetzungsbrücken und partieller Dehydratation bzw. Brenz-Reaktionen sowie durch chemisch-hydrolytischen Abbau in Anwesenheit saurer oder alkalischer Katalysatoren hergestelltes Stärke-Abbauprodukt ist, welches maximal die Hälfte des ursprünglichen durchschnittlichen Molekulargewichtes des Amyloseanteils der eingesetzten Stärke aufweist.

Ferner ist die erfindungsgemäße Verwendung dadurch gekennzeichnet, daß das Kohlenhydrat weniger als eine Carbonylgruppe bzw. potentielle Carbonylgruppe pro Monosaccharideinheit aufweist. Vorzugsweise weist das Kohlenhydrat im Fall von Stärke-Abbauprodukten maximal 2 Carbonylgruppen bzw. potentielle Carbonylgruppen pro Stärke-Abbauprodukt-Molekül auf. Dabei sind präsumtive Carbonylgruppen solche, welche unter säurekatalysierten Acetalisierungsbedingungen funktionelle Gruppen ausbilden, welche die für Aldehyd- und Ketogruppen typischen Reaktionen zeigen, nämlich die Acetalbildung mit Alkoholen oder die Oximbildung mit Hydroxylamin. Solche Gruppen sind bestimmbar mit Oxim-Titrations-Methoden wie von R.C.Schulz et al. angegeben (Makromol.Chemie 20 [1956], 161). Beispielsweise handelt es sich dabei um die halbacetalischen Endgruppen von Stärke und deren Abbauprodukten, nicht jedoch um die cyclischen Vollacetale der einzelnen Pyranoseringe entlang eines Stärkemoleküls.

Die erfindungsgemäße Verwendung ist dann besonders vorteilhaft, wenn das Carbonyläquivalentgewicht des eingesetzten Stärkeabbauproduktes zwischen 500 und 10000 und der Polymerisationsgrad des Polyvinylalkohols zwischen 10 und 4000, vorzugsweise 100 und 1500, liegt.

Ein Weg zur Ausführung der Erfindung

Die Erfindung wird in der Folge anhand eines Ausführungsbeispiels sowie anhand von Vergleichsbeispielen näher erläutert:

**A. Allgemeine Arbeitsvorschrift für die Herstellung des biologisch abbaubaren Umsetzungsproduktes von Polyvinylalkohol mit Kohlenhydraten.**

A.1 Durchführung im Labormaßstab:

In einem Reaktionsgefäß, versehen mit Soxhlet und Rückflußkühler wird eine Lösung von 1 g Polyvinylalkohol von der Type MOWIOL x-yz der Firma Hoechst mit einem Verseifungsgrad V in Mol%, einem mittleren Polymerisationsgrad $P_W$, entsprechend einem mittleren Molekulargewicht $M_W$ in 10 ml Dimethylsulfoxid (DMSO) vorgelegt.

Zu dieser Lösung werden 3g eines Stärke-Abbauproduktes, welches durch hydrolytischen Abbau von nativer Stärke auf das Molekulargewicht $_{st}M_n$ abgebaut worden ist, zugegeben. Diese Mischung wird unter Rühren auf 120°C erwärmt. Anschließend wird ein Vakuum von 15 mm Hg angelegt. Im Soxhlet, welcher zwischen Reaktionsgefäß und Rückflußkühler geschaltet ist, kann gegebenenfalls ein Molekularsieb (Korngröße 4 Angström) als Trockenmittel verwendet werden. Anschließend wird der saure Katalysator in einer Menge bezogen auf 100 g Polyvinylalkoholeinwaage zugegeben. Nach der Zugabe des sauren Katalysators setzt die Acetalbildung ein. Das Reaktionsgemisch wird anschließend noch 5 Stunden unter Rückfluß im Vakuum gerührt. Anschließend wird das Reaktionsgemisch abgekühlt und durch Zugabe einer zum eingesetzten sauren Katalysator stöchiometrischen Menge an basischen Verbindungen neutralisiert. Als basische Verbindungen eigen sich beispielsweise Natriumcarbonat, Triethylamin oder Triethanolamin. Die Neutralisation wird mittels pH-Glaselektrode (Einstabmeßkette) überprüft, wozu eine Probe von 1 ml Reaktionsmischung entnommen und auf 50 ml mit destilliertem Wasser verdünnt wird. Nach der Neutralisation wird ca. 24 Stunden gegen Wasser dialysiert, wobei Dialyseschläuche mit einem Molekulartrennvolumen $TR_{max}$ eingesetzt werden. Durch die Dialyse werden DMSO und der neutralisierte Katalysator abgetrennt. Die verbleibende Reaktionslösung wird in einen Überschuß von Äthanol eingegossen, sodaß alle organischen Inhaltsstoffe ausgefällt werden. Der abfiltrierte Fällungskuchen wird mit heißem Dimethylformamid (DMF) behandelt, wobei das gebildete Umsetzungsprodukt von Polyvinylalkohol und Kohlehydraten in Lösung geht und eventuell unreagiertes Stärke-Abbauprodukt als Rückstand verbleibt.

Die genannten Versuchsparameter sind aus Tabelle I ersichtlich. Die darin verwendeten Abkürzungen werden wie folgt erläutert:

pTosS = p-Toluol-Sufonsäure

GF-Test= "Geschlossene-Flasche-Test" nach W.K.Fischer; Fette-Seifen-Anstrichmittel 65(1963), 1S 37ff

OF-Test: "Offene-Flaschen-Test; (mod.Sturm-Test, OECD-Richtlinie 301B; Arbeitsvorschrift EMPA sop 147); analog GF-Test, jedoch bei const. 02-Konzentration im SAPROMAT (Fa. Voith D-7920 Heidenheim a.d.Brenz)

Es werden die Versuchsvarianten 2 - 8 ausgeführt, wobei Beispiel Nr. 1 der oben angeführten allgemeinen Arbeitsvorschrift entspricht.

TABELLE I

| Beispiel Nr. | 2 | 3 | 4 | 5 | 6 | 7 | 8 |
|---|---|---|---|---|---|---|---|
| Vers.Grad V Mol% | 98,5 | 98,5 | 98,5 | 98,5 | 88 | 88 | 88 |

TABELLE I   (fortgesetzt)

| Beispiel Nr. | 2 | 3 | 4 | 5 | 6 | 7 | 8 |
|---|---|---|---|---|---|---|---|
| Mittl.Pol. Grd.$P_w$ | 1400 | 1000 | 600 | 360 | 2700 | 1400 | 750 |
| $M_w$-PVA ca. | 62000 | 45000 | 27000 | 16000 | 130000 | 67000 | 37000 |
| MOWIOL-Typ x-yz | 10-98 | 6-98 | 4-98 | 3-98 | 18-88 | 8-88 | 5-88 |
| native Stärke | Kartoffel | Tapioca | Kartoffel | Mais | Mais | Reis | Mais |
| abgeb.auf $_{st}M_n$ | 8000 | 2000 | 5000 | 20000 | 8000 | 40000 | 1000 |
| Mol-Sieb | ja | nein | nein | nein | nein | ja | nein |
| Katalysator | $P_2O_5$ | $H_3PO_4$ | $H_3PO_4$ | p-TosS | $H_3PO_4$ | HCl | $P_2O_5$ |
| g/100g PVA | 3 | 5 | 5 | 5 | 7 | 5 | 2 |
| $Tr_{max}$ | 12000 | 8000 | 12000 | 25000 | 12000 | 50000 | 8000 |
| 10kg/h Weichm. pro St kg/h | 11,8 | 15 | 15 | 10 | 20 | 25 | 30 |
| OF-Test % mineral in 28 d | 62 | 63 | 65 | 67 | 47 | 55 | 66 |
| GF-Test % $BSBT_{30d}$ | 48 | 52 | 57 | 62 | 43 | 41 | 45 |
| Reißdehnung MPa | 18 | 17 | 15 | 12 | 25 | 12 | 12 |

## A.2 Durchführung im Industriemaßstab

Das biologisch abbaubare Umsetzungsprodukt von Polyvinylalkohol und Kohlenhydraten kann in einem Zweiwellenextruder hergestellt werden. Bei der vorliegenden Versuchsdurchführung beträgt der Durchmesser der Extruderschnecke 46 mm; die Gehäuselänge entspricht dem vierfachen Schnecken-Durchmesser. Die Extrudervorrichtung besitzt ferner drei Dosiereinrichtungen. Über die Dosiereinrichtung 1 wird hydrolytisch abgebaute Stärke ($_{st}M_n$ = 2000; enthaltend 18 kg Wasser auf 100 kg trockenes Stärkeabbauprodukt) in einer Dosiermenge von beispielsweise 5,9 kg/ Stunde in das Extrudergehäuse eingebracht. Über die Dosiereinrichtung 2 (im Gehäuse 3) wird der Polyvinylalkohol (Type MOWIOL 8-88 der Firma HOECHST AG) beispielsweise in einer Menge von 5,0 kg/Stunde in den Extruder eingebracht. Dieses Ansatzverhältnis entspricht 96,76g Stärke-Abbauprodukt (trocken) auf 100g Polyvinylalkohol (das sind 49 Gew% Stärkekomponente in der Ausgangsmischung bzw. 2,2 Carbonyläquivalente pro 100 Vinylalkoholäquivalente (Acetalisierungsgrad: 4%). Über die Dosiereinrichtung 3 (im Gehäuse 6) wird der saure Katalysator in einer Feststoffdosierung von 0,1 kg/ Stunde dem Reaktionsgemisch zugebracht. Die Extrudervorrichtung weist ferner am Ende eine Granuliereinrichtung auf; die Temperatureinstellung an den jeweiligen Gehäusen kann wie folgt gewählt werden:

| | 1 | 2 | 3 | 4 | 5 | 6-10 |
|---|---|---|---|---|---|---|
| °C: | 20 | 50 | 130 | 180 | 200 | 160 |

Die Schneckendrehzahl beträgt beispielsweise 100 Umdrehungen/min. Mit dieser Extrudervorrichtung kann das biologisch abbaubare Umsetzungsprodukt von Polyvinylalkohol und Kohlenhydraten in Form von heißwasserlöslichen Granulatkörnern gewonnen werden; der Acetalisierungsgrad des Granulates beträgt beispielsweise 4 Mol%.

## B Allgemeine Arbeitsvorschrift für die erfindungsgemäße Verwendung des biologisch abbaubaren Umsetzungsproduktes von Polyvinylalkohol und Kohlenhydraten hergestellt nach den Schritten A1 oder A2 zur Thermoplastifizierung von Stärke.

In einer zweiten Verfahrensstufe kann in demselben Zweiwellenextruder wie unter A2 genannt bei derselben Temperatureinstellung das biologisch abbaubare Umsetzungsprodukt von Polyvinylalkohol und Kohlenhydraten als Weichmacher für die Thermoplastifizierung von Stärke erfindungsgemäß wie folgt verwendet werden:

In das Gehäuse 1 wird mit einer Dosiereinrichtung native Kartoffelstärke mit 18 kg Wassergehalt pro 100 kg Stärke in einer Menge von 11,8 kg/Stunde in die Extrudervorrichtung eingebracht. Am Gehäuse 3 wird mit einer weiteren Dosiereinrichtung der unter A hergestellte Weichmacher in einer Dosiermenge von 10 kg/Stunde dem Extrudergehäuse zugegeben. Es wird ein Granulat erhalten, welches thermoplastisch zu Formkörpern, Folien und Fasern weiterverarbeitet werden kann. An einer durch Extrusion durch eine Breitschlitzdüse hergestellten Folie aus dem genannten Granulat mit einer Dicke von 30 μm werden folgende Eigenschaften gemessen:

- die Reißdehnung in MPa
- die Menge an migrationsfähigen Substanzen (gemessen nach dem E98-Test) in mg/dm$^2$ sowie
- die biologisch Abbaubarkeit (gemessen nach dem OF- bzw. nach dem GF-Test).

Die Werte der Versuche A, B sind in Tabelle I angeführt. Diese Werte aus Tabelle I werden nunmehr mit Vergleichswerten unter Verwendung von bekannten Weichmachern für die Plastifizierung von Stärke verglichen.

Tabelle II

| | Reißdehnung in MPa | Migrationsfähige in mg/dm | Substanzen OF-Test | biologische Abbaubarkeit GF-Test |
|---|---|---|---|---|
| **Vergleichsbeispiel 1** | | | | |
| Weichmacher: Glyzerin | 12 MPa | > 10 mg/dm$^2$ | 30d: 100% | 30d: 96% |
| **Vergleichsbeispiel 2** | | | | |
| Weichmacher: Polyvinylalkohol des Typs MOWIOL-18-88 | 12 MPa | 12 mg/dm$^2$ | 30d: 29% | 30d: 24% |
| **Vergleichsbeispiel 3** | | | | |
| Weichmacher: Polyvinylalkohol des Typs MOWIOL-10-98 | 6 MPa | 2 mg/dm$^2$ | 30d: 32% | 30d: 28% |
| **Vergleichsbeispiel 4** | | | | |
| Weichmacher: Polyvinylalkohol Stärke Blend gemäß der EP-A 304401 | 6 MPa | -- | 30d: 34% | 30d: 30% |

Vergleicht man nun die Werte aus Tabelle II mit jenen aus Tabelle I, so zeigt sich, daß insbesondere die erfindungsgemäße Verwendung einen Gehalt an migrationsfähigen Substanzen < 1 mg/dm$^2$ aufweisen, während die wertgemäßen Vergleichsbeispiele 1 und 2 einen Wert von 12 mg/dm$^2$ an migrationsfähigen Substanzen aufweisen. Obzwar gemäß Vergleichsbeispiel 3 der Anteil an migrationsfähigen Substanzen zwar relativ niedrig ist (aber immer noch unzulässig für Lebensmittelverpackung), nämlich nur 2 mg/dm$^2$, ist die thermoplastizierende Wirkung des Weichmachers derart gering, daß die endgefertigte Folie lediglich eine Reißdehnung von 6 MPa aufweist.

Ferner zeigt die erfindungsgemäße Verwendung eine sehr gute biologische Abbaubarkeit des Umsetzungsproduktes von Polyvinylalkohol und Kohlenhydraten zu $CO_2$ und $H_2O$, während gemäß Vergleichsbeispielen 2 und 3 bei Polyvinylalkoholen, sowie gemäß Vergleichsbeispiel 4 auch bei Polyvinylalkohol-Stärke-Blends der biologische Abbau bei ca. 30% Sauerstoffzehrung im GF-Test stagniert.

Gewerbliche Anwendbarkeit

Die gewerbliche Anwendbarkeit des genannten, biologisch abbaubaren Umsetzungsproduktes von Polyvinylalkohol und Kohlenhydraten ist in der Verwendung als Weichmacher für die Thermoplastifizierung von Stärke und/ oder Stärkegemischen zu erblicken. Diese Anwendung ist bekannten Anwendungen insoferne überlegen, daß einerseits die vollständige Abbaubarkeit des Weichmachers und andererseits eine ausreichende Thermoplastifizierung der Stärke sowie ein möglichst geringer Gehalt an migrationsfähigen Substanzen im Vergleich zu bekannten Weichmachern gewährleistet wird.

**Patentansprüche**

1. Verwendung von biologisch abbaubaren Umsetzungsprodukten von Polyvinylalkohol und Kohlenhydraten, welche in Gegenwart von empirisch festzulegenden Wassermengen aus Polyvinylalkoholen mit einem Verseifungsgrad von 88 bis 99,5 Mol% durch säurekatalysierte Acetalisierungs- und/oder Umacetalisierungsreaktion mit Carbonylgruppen bzw. potentielle Carbonylgruppen enthaltenden Kohlenhydraten herstellbar sind, wobei der Acetalisierungsgrad, ausgedrückt in Carbonyläquivalenten pro 100 Vinylalkoholäquivalente zwischen 0,2 und 20 liegt, als Weichmacher für die Thermoplastifizierung von Stärke und/ oder Stärkegemischen.

2. Verwendung nach Anspruch 1, dadurch gekennzeichnet, daß das Umsetzungsprodukt aus Polyvinylalkoholen und Kohlenhydraten auf Basis von Stärke-Abbauprodukten in einem Verhältnis von 2 bis 5 Carbonyläquivalenten auf 100 Vinylalkoholäquivalente entsprechend einem Acetalisierungsgrad von 4 bis 10 Mol% bezogen auf die Hydroxylgruppen des eingesetzten Polyvinylalkohols herstellbar ist.

3. Verwendung nach Anspruch 1 oder 2, dadurch gekennzeichnet, daß die Stärkemischungen thermoplastische Polymere auf Basis von Polyestern, herstellbar durch Umsetzung von Hydroxyalkanoaten und/oder Alkandiolen mit Alkandicarbonsäuren, enthalten.

4. Verwendung nach einem der Ansprüche 1 bis 3, dadurch gekennzeichnet, daß der Verseifungsgrad des Polyvinylalkohols zwischen 90 und 99 Mol% liegt.

5. Verwendung nach einem der Ansprüche 1 bis 4, dadurch gekennzeichnet, daß das Kohlenhydrat ein Mono- oder Disaccharid ist.

6. Verwendung nach einem der Ansprüche 1 bis 5, dadurch gekennzeichnet, daß das Kohlenhydrat ein Polysaccharid ist.

7. Verwendung nach Anspruch 6, dadurch gekennzeichnet, daß das Polysaccharid Stärke bzw. ein aus Stärke durch Säurekatalyse hergestelltes, partiell hydrolysiertes Abbauprodukt ist.

8. Verwendung nach Anspruch 6, dadurch gekennzeichnet, daß das Polysaccharid ein aus Stärke durch Oxidationsreaktion hergestelltes Abbauprodukt ist.

9. Verwendung nach Anspruch 8, dadurch gekennzeichnet, daß die Oxidationsreaktion an nativer Stärke in Gegenwart wässeriger Hypochloritlösung durchgeführt wird.

10. Verwendung nach Anspruch 6, dadurch gekennzeichnet, daß das Polysaccharid ein aus Stärke durch thermische und mechanische Belastung und dadurch eingeleitete Entknäuelung der Stärkemoleküle, sowie Spaltung von Vernetzungsbrücken und partieller Dehydratation bzw. Brenz-Reaktionen hergestelltes Stärke-Abbauprodukt sogenannte destrukturierte, desintegrierte Stärke ist.

11. Verwendung nach Anspruch 6, dadurch gekennzeichnet, daß das Polysaccharid ein aus Stärke durch thermische und mechanische Belastung und dadurch eingeleitete Entknäuelung der Stärkemoleküle sowie durch Spaltung von Vernetzungsbrücken durch partielle Dehydratation bzw. Brenz-Reaktionen und chemisch-hydrolytischen Abbau in Anwesenheit saurer oder alkalischer Katalysatoren hergestelltes Stärke-Abbauprodukt ist, welches maximal die Hälfte des ursprünglichen, durchschnittlichen Molekulargewichtes des Amyloseanteils der eingesetzten Stärke aufweist.

12. Verwendung nach Anspruch 11, dadurch gekennzeichnet, daß das Carbonyläquivalentgewicht des eingesetzten Stärke-Abbauproduktes zwischen 500 und 10000 liegt.

13. Verwendung nach einem der Ansprüche 1 - 12, dadurch gekennzeichnet, daß das Kohlenhydrat weniger als eine Carbonylgruppe bzw. potentielle Carbonylgruppe pro Monosaccharideinheit aufweist.

14. Verwendung nach einem der Ansprüche 1 - 12, dadurch gekennzeichnet, daß das Kohlenhydrat maximal 2 Carbonylgruppen bzw. potentiellen Carbonylgruppen pro Stärke-Abbauprodukte-Molekül aufweist.

15. Verwendung nach einem der Ansprüche 1 - 14, dadurch gekennzeichnet, daß der Polymerisationsgrad des Polyvinylalkohols zwischen 10 und 4000 liegt.

16. Verwendung nach Anspruch 15, dadurch gekennzeichnet, daß der Polymerisationsgrad zwischen 100 und 1500 liegt.

## Claims

1. Use of biologically degradable reaction products of polyvinyl alcohol and carbohydrates which can be produced in the presence of empirically determinable quantities of water from polyvinyl alcohols having a degree of saponification of 88 to 99.5 mol % by acid-catalysed acetalisation and/or reacetalisation reaction with carbonyl groups or carbohydrates containing potential carbonyl groups, wherein the degree of acetalisation, expressed in carbonyl equivalents per 100 vinyl alcohol equivalents, is between 0.2 and 20, as plasticisers for the thermoplasticisation of starch and/or starch mixtures.

2. Use according to claim 1, characterised in that the reaction product can be produced from polyvinyl alcohols and carbohydrates based on starch breakdown products in a ratio of 2 to 5 carbonyl equivalents per 100 vinyl alcohol equivalents corresponding to a degree of acetalisation of 4 to 10 mol % based on the hydroxyl groups of the polyvinyl alcohol used.

3. Use according to claim 1 or 2, characterised in that the starch mixtures contain thermoplastic polymers based on polyesters which can be produced by reaction of hydroxyalkanoates and/or alkane diols with alkane dicarboxylic acids.

4. Use according to one of claims 1 to 3,
characterised in that the degree of saponification of the polyvinyl alcohol is between 90 and 99 mol %.

5. Use according to one of claims 1 to 4,
characterised in that the carbohydrate is a mono- or disaccharide.

6. Use according to one of claims 1 to 5,
characterised in that the carbohydrate is a polysaccharide.

7. Use according to claim 6, characterised in that the polysaccharide is starch or a partially hydrolysed breakdown product produced from starch by acid catalysis.

8. Use according to claim 6, characterised in that the polysaccharide is a breakdown product produced from starch by an oxidation reaction.

9. Use according to claim 8, characterised in that the oxidation reaction is carried out on native starch in the presence of aqueous hypochlorite solution.

10. Use according to claim 6, characterised in that the polysaccharide is a starch breakdown product known as destructured disintegrated starch produced from starch by thermal and mechanical stress and thereby initiated uncoiling of the starch molecule and cleavage of crosslinking bridges and partial dehydration or pyro-reactions.

11. Use according to claim 6, characterised in that the polysaccharide is a starch breakdown product which is produced from starch by thermal and mechanical stress and thereby initiated uncoiling of the starch molecules and by cleavage of crosslinking bridges by partial dehydration or pyro-reactions and chemico-hydrolytic breakdown in the presence of acidic or alkaline catalysts and which has at most half of the original average molecular weight of the amylose content of the starch used.

**12.** Use according to claim 11, characterised in that the carbonyl equivalent weight of the starch breakdown product used is between 500 and 10000.

**13.** Use according to one of claims 1 to 12, characterised in that the carbohydrate has less than one carbonyl group or potential carbonyl group per monosaccharide unit.

**14.** Use according to one of claims 1 to 12, characterised in that the carbohydrate has at most two carbonyl groups or potential carbonyl groups per molecule of starch breakdown product.

**15.** Use according to one of claims 1 to 14, characterised in that the degree of polymerisation of the polyvinyl alcohol is between 10 and 4000.

**16.** Use according to claim 15, characterised in that the degree of polymerisation is between 100 and 1500.

**Revendications**

**1.** Utilisation, en tant que plastifiant pour la thermoplastification d'amidons et/ou mélange d'amidons, de produits de réaction d'alcool polyvinylique et d'hydrates de carbone biodégradables qui peuvent être préparés, en présence de quantités d'eau déterminées empiriquement, à partir d'alcool polyvinylique ayant un indice de saponification de 88 à 99,5 Mole %, par acétalisation et/ou transacétalisation catalysée par un acide avec des hydrates de carbone contenant des groupes carbonyles ou des groupes pouvant donner des groupes carbonyles, dans lesquels l'indice d'acétalisation, exprimé en équivalents carbonyles pour 100 équivalents alcool vinylique, est compris entre 0,2 et 20.

**2.** Utilisation selon la revendication 1, caractérisée en ce que le produit de réaction peut être préparé à partir d'alcool polyvinylique et d'hydrates de carbone à base de produits de dégradation d'amidon, selon un rapport de 2 à 5 équivalents carbonyles sur 100 équivalents alcool vinylique correspondant à un indice d'acétalisation de 4 à 10 Mole % exprimé par rapport aux groupes hydroxyles de l'alcool polyvinylique utilisé.

**3.** Utilisation selon la revendication 1 ou 2, caractérisée en ce que les mélanges d'amidons renferment des polymères thermoplastiques à base de polyesters, pouvant être préparés par réaction d'hydroxyalcanoates et/ou d'alcanediols avec des acides alcanedicarboxyliques.

**4.** Utilisation selon l'une quelconque des revendications 1 à 3, caractérisée en ce que l'indice de saponification de l'alcool polyvinylique est compris entre 90 et 99 Mole %.

**5.** Utilisation selon l'une quelconque des revendications 1 à 4, caractérisée en ce que l'hydrate de carbone est un mono- ou un disaccharide.

**6.** Utilisation selon l'une quelconque des revendications 1 à 5, caractérisée en ce que l'hydrate de carbone est un polysaccharide.

**7.** Utilisation selon la revendication 6, caractérisée en ce que le polysaccharide est un amidon ou un produit de dégradation. préparé par catalyse acide à partir d'amidon, partiellement hydrolysé.

**8.** Utilisation selon la revendication 6, caractérisée en ce que le polysaccharide est un produit de dégradation obtenu par une réaction d'oxydation à partir d'amidon.

**9.** Utilisation selon la revendication 8, caractérisée en ce que la réaction d'oxydation sur l'amidon naturel est effectuée en présence d'une solution aqueuse d'hypochlorite.

**10.** Utilisation selon la revendication 6 caractérisée en ce que le polysaccharide est un produit de dégradation d'amidon obtenu par application de contraintes thermiques et mécaniques à la molécule d'amidon et par le déroulement ainsi initié de ladite molécule, ou par clivage des ponts de réticulation et déshydratation partielle, ou réactions de pyrolyse, ce qu'on appelle un amidon déstructuré, désintégré.

11. Utilisation selon la revendication 6, caractérisée en ce que le polysaccharide est un produit de dégradation d'amidon obtenu par application de contraintes thermiques et mécaniques à la molécule d'amidon et par le déroulement ainsi initié de ladite molécule, ou par clivage des ponts de réticulation par déshydratation partielle ou réaction de pyrolyse et dégradation chimique hydrolytique, en présence de catalyseurs acides ou basiques qui, au maximum, présente la moitié de la masse moléculaire moyenne initiale de la fraction d'amylose de l'amidon utilisé.

12. Utilisation selon la revendication 11, caractérisée en ce que la masse équivalente en carbonyle des produits de dégradation de l'amidon est comprise entre 500 et 10 000.

13. Utilisation selon l'une quelconque des revendications 1 à 12, caractérisée en ce que l'hydrate de carbone présente moins de un groupe carbonyle ou groupe carbonyle pouvant donner un groupe par unité monosaccharide.

14. Utilisation selon l'une quelconque des revendications 1 à 12, caractérisée en ce que l'hydrate de carbone présente au maximum 2 groupes carbonyles ou groupes carbonyles pouvant donner des groupes par molécule de produit de dégradation de l'amidon.

15. Utilisation selon l'une quelconque des revendications 1 à 14, caractérisée en ce que le degré de polymérisation des alcools polyvinyliques est compris entre 10 et 4 000.

16. Utilisation selon la revendication 15, caractérisée en ce que le degré de polymérisation est compris entre 100 et 1 500.